# EUROPÄISCHE PATENTSCHRIFT

(11) **EP 1 596 340 B1**
(45) Veröffentlichungstag und Bekanntmachung des Hinweises auf die Patenterteilung: **21.11.2012**
(21) Anmeldenummer: 05007735.3
(22) Anmeldetag: 08.04.2005
(51) Int. Cl.: G07B 15/06, G07B 15/00, H04L 9/32

(54) **Kommunikationssystem zur Erfassung von Mautgebühren**
Communication system for collection of road taxes
Système de communication visant la saisie des droits de péage

(30) Priorität: 14.05.2004 DE 102004024421; 02.08.2004 DE 102004037447
(43) Veröffentlichungstag der Anmeldung: 16.11.2005
(73) Patentinhaber: Daimler AG, 70327 Stuttgart (DE)
(72) Erfinder: Beier, Wolfgang, 71263 Weil der Stadt (DE)
(74) Vertreter: JENSEN & SON

(56) Entgegenhaltungen:
- EP-A- 0 780 801
- EP-A- 0 998 073
- US-A- 6 088 717
- SCHNEIER B: "Applied Cryptography" 1996, APPLIED CRYPTOGRAPHY. PROTOCOLS, ALGORITHMS, AND SOURCE CODE IN C, NEW YORK, JOHN WILEY & SONS, US, PAGE(S) 183-187 , XP002954321 ISBN: 0-471-11709-9 * Seite 5 *

## Beschreibung

Die Erfindung betrifft ein Verfahren zur Erfassung von Mautgebühren nach dem Oberbegriff des Anspruchs 1.

Bisher sind Mautkonzepte bekannt, bei denen jeweils einem Mautbetreiber ein einziges Mauterfassungsgebiet zugeordnet ist und dieser die Mautgebühren entsprechend dem in diesem Gebiet aufkommenden Verkehrsaufkommen mit dem Mautbetreiber direkt abrechnet.

Die EP-A-0 780 801 (D1) offenbart ein derartiges Mautkonzept, wobei ein Verfahren zur automatischen Abwicklung von bargeldlosen und vorzugsweise berührungsfreien Zahlungsvorgängen, beispielsweise innerhalb eines Gebührenerfassungssystems für mautpflichtige Verkehrswege beschrieben wird. Dabei kommunizieren die in Fahrzeugen installierten on-boardunits mit stationären Einheiten des Mautsystems unter Einsatz von asymmetrischer Verschlüsselung (public/ privat key) der übertragenen Daten nach vorhergehender gegenseitiger Authentisierung durch die Verwendung von Zertifikaten. Das System sieht dabei eine zentrale Zertifizierungsstelle vor, die auch mittels bilateraler Zahlungsabwicklung betrieben werden kann.

Die US-A 6 088 717 (D2) offenbart außerdem, wie auf dem Gebiet der rechnergestützten Datenübertragung mit dem sogenannten "distributed key management" unterschiedliche Einheiten mittels Zertifikaten arbeiten, die von bekannten, vertrauenswürdigen Parteien bereits zertifiziert wurden. Es wird jedoch kein Verfahren näher beschrieben, wie ein Roaming-System mit mehreren

Mautbetreibern effektiv aufgebaut werden kann.

Wenn mehrere Betreiber von Mautsystemen gegenseitig die Fahrzeuge bzw. deren Fahrzeuggeräte zur Abrechnung der Maut im jeweils eigenen Gebiet akzeptieren, dann entstehen komplexe Anforderungen an die Betrugssicherheit des Gesamtsystems und aller Beteiligter.

Im Bereich der Banken wird in Europa eine solche komplexe Struktur bzw. Anforderung dadurch gelöst, dass ein Schlüsselverwaltungssystem gewählt wird, das hierarchisch ist. Die Europäische Zentralbank hat einen Hauptschlüssel, dessen öffentlichen Teil alle kennen und jede hierarchische Schicht darunter lässt sich ihren Schlüssel von der EZB bestätigen und das entsprechend in den Schichten darunter. Damit kann jede Bank den öffentlichen Schlüssel jeder anderen

Bank nachprüfen, wenn diese Bank zunächst nur dem Schlüssel seiner hierarchischen Mutter glaubt und dann die Bestätigungskette die Hierarchie rauf und wieder herunter zur entsprechenden Bank nachvollzieht. Nachteil dieser Lösung ist, dass es eine klar definierte Hierarchie geben muss, die in der Mautwelt nicht durchsetzbar ist. Eine solche zentrale Schlüsselmanagementfunktion ist wegen der Machtfülle einer solchen Einrichtung nicht akzeptabel.

Der Erfindung liegt die Aufgabe zugrunde, ein Verfahren für die Erfassung von Mautgebühren mittels eines drahtlosen Kommunikationssystems zu schaffen, das komfortabel und sicher eine Mauterfassung eines Fahrzeuges in einem fremden Mauterfassungsbereich ermöglicht.

Diese Aufgabe wird durch ein Verfahren zur Erfassung von Mautgebühren mit den Merkmalen des Anspruchs 1 gelöst.

Vorteilhafte Ausgestaltungen der Erfindung sind Gegenstand der Unteransprüche.

Das erfindungsgemäße Verfahren ermöglicht es, dass beispielsweise ein Fahrzeug in einem anderen Mauterfassungsbereich als dem Erfassungsbereich seines Mautbetreibers direkt oder indirekt Kontakt mit dem anderen Mautbetreiber auch Roaming-Mautbetreiber oder Roaming-Partner genannt, aufnimmt. Dabei wird zur Erreichung einer ausreichend sicheren Kommunikation sowohl eine Kommunikation auf Basis eines public keys bzw. eines private keys und zusätzlich auf Basis eines Zertifikates verwendet, welches typischerweise zwischen den beiden Mautbetreibern ausgehandelt wurde und welches zum Gegenstand hat, dass dem Übermittler des Zertifikates genauso getraut werden soll wie dem Ersteller des Zertifikates getraut wird. Damit ist beispielsweise sichergestellt, dass aufgrund der Vereinbarung zwischen den Mautbetreibern (dem eigenen Mautbetreiber und dem anderen Mautbetreiber/ Roaming-Partner) der Übermittler des Zertifikates als vertrauenswürdig betrachtet wird und somit einerseits auf Basis des Zertifikates andererseits auf Basis der verwendeten public bzw. private keys bzw. daraus abgeleiteter symmetrischer Schlüssel auch ohne wechselseitige direkte Vereinbarung zur sicheren Übertragung von Informationen eine sichere Übertragung und damit ein Vertrauen in den Inhalt der Übertragung geschaffen ist.

Neben den Mautbetreibern selbst können verschiedene einzelne Stellen der Mautsysteme in entsprechender Weise derartige bzw. vergleichbare Zertifikate bilateral ohne Einschaltung einer zentralen Zertifizierungsstelle vereinbaren und dadurch eine sichere Kommunikation zwischen verschiedenen Teilnehmern der Mautsysteme über Kommunikationseinrichtungen zur drahtlosen Kommunikation ermöglichen. Auf der Basis dieser sicheren und vertrauensvollen Kommunikation können mautrelevante Informationen zwischen Fahrzeugen und anderen Stellen anderer Mautsysteme beispielsweise Kontrollbrücken, Abrechnungsstellen und Ähnliches realisiert werden.

Dabei hat es sich insbesondere bewährt, ein Kommunikationssystem für die Erfassung, Bestimmung oder Abrechnung von Mautgebühren mit einem Schlüsselmanagement vorzuschlagen, bei dem alle Partner oder Stellen der Mautsysteme gleichgestellt sind. Jeder kann seinen eigenen geheimen Schlüssel selbst definieren und bei Bedarf mit einem Vertragspartner (z.B. einem benachbarten Maut-Betreiber) gegenseitiges Vertrauen vereinbaren und dementsprechende Zertifikate gegenseitig ausstellen. Diese Zertifikate werden insbesondere den jeweiligen Endgeräten, z.B. einem Fahrzeuggerät des einen Betreibers und einer Kontrollanlage des anderen Betreibers, insbesondere offline, übermittelt. Dabei werden zusätzlich zu den Zertifikaten im Rahmen der Kommunikation private und public keys verwendet, die die Kommunikation zwischen den Kommunikationspartnern zusätzlich sichern. Mit dem Austausch solcher Zertifikate, die ggf. ohne Rückfrage an die ausstellende Stelle funktionieren, können verlässliche Sicherungsprozesse zwischen unbekannten Einheiten durchgeführt werden, ohne dass dies einen akzeptablen Aufwand übersteigt.

Es wird dabei kein zentrales "Trust Center" als zentrale Zertifizierungsstelle gebraucht. Jeder Maut-Betreiber in Europa erzeugt seinen eigenen Schlüssel in Verbindung mit beigefügten Zertifikaten, die der Betreiber bilateral mit anderen vereinbart hat, und konfiguriert so seine eigenen Fahrzeugeinheiten. Im Roaming-Fall, also in der Situation, dass ein Fahrzeug eines Betreibers in den Erfassungsbereich eines anderen Betreibers eindringt, kann das Fahrzeug und auch eine Kontrolleinrichtung des Mautsystems dann fälschungssicher mit diesen fremden Geräten/Fahrzeugen umgehen.

Im Fall, dass ein neuer Betreiber dazu kommt, können alle - auch die schon konfigurierten Fahrzeuggeräte - unverändert auch in dem neuen Mautgebiet fälschungssicher arbeiten, wenn entsprechende Zertifikate zwischen den Betreibern vereinbart sind und bei der Kommunikation ausgetauscht werden.

Es hat sich besonders bewährt, dass ein Übermitteln eines Zertifikates als erfolgreich gewertet wird, wenn das übermittelte Zertifikat auf einen erfolgreich zertifizierten Kommunikationspartner referenziert. Hierdurch lässt sich ein Fortpflanzen bzw. Ausbreiten des Vertrauens in dem Kommunikationssystem realisieren, das den Organisationsaufwand für die Schlüsselverwaltung merklich reduziert. Der Organisations- bzw. Übertragungsaufwand lässt sich zusätzlich reduzieren, wenn das Zertifikat und der public oder privat key gemeinsam insbesondere in integrierter Weise übertragen werden. Dies kann erfolgen, ohne die Sicherheit wesentlich zu beeinträchtigen.

Als Mautbetreiber können grundsätzlich auch solche Unternehmen auftreten, die kein eigenes Mautsystem betreiben aber als Zahlungsabwickler für zu zahlende Mautzahlungen auftreten. Dies kann beispielsweise eine Bank sein, die kein eines Mautsystem betreibt aber die Mautzahlungsabwicklung auf Basis von Verträgen mit Roaming-Partnern durchführt.

Im Folgenden wird die Erfindung an einer beispielhaften Realisierung dargestellt. Die Erfindung ist nicht auf diese Realisierung beschränkt. Weitere vorteilhafte Details sind aus dieser Darstellung entnehmbar.

Dabei zeigt:

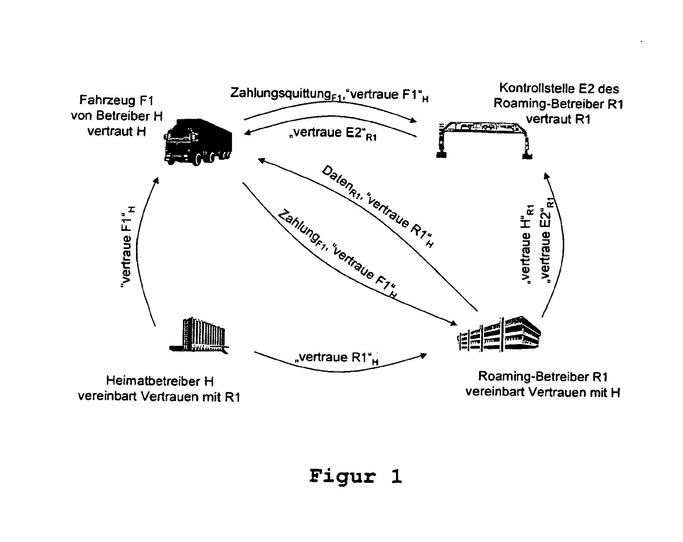

- Fig. 1: einen schematischen Aufbau eines Mautsystems mit Kommunikationssystem gemäß der Erfindung.

In Figur 1 sind die Zusammenhänge des Zusammenwirkens von verschiedenen Komponenten oder Stellen von Mautsystemen graphisch dargestellt. Diese Komponenten oder Stellen von Mautsystemen treten unter Verwendung eines erfindungsgemäßen Kommunikationssystems in Kontakt miteinander.

Folgende beispielhafte Abläufe ergeben sich:

Der Mautbetreiber H konfiguriert ein Fahrzeuggerät F1 und gibt ihm den öffentlichen Schlüssel seines Heimatbetreibers H (der gesichert gespeichert wird) sowie ein Zertifikat mit, das jeden Adressaten auffordert dem öffentlichen Schlüssel von F1 zu trauen, der auch dem Betreiber H traut Dieses Zertifikat ist mit dem geheimen Schlüssel des Betreibers H unterschrieben.

Der Heimatbetreiber H vereinbart auch mit seinen Vertragspartnern gegenseitiges Vertrauen und übergibt in diesem Zusammenhang auch seinem Roaming-Partner, einem anderen Mautbetreiber R1 ein Zertifikat, das alle Empfänger auffordert R1 zu trauen, die auch dem Heimatbetreiber H trauen.

Wenn jetzt das Fahrzeug in das Gebiet des Roaming-Partners R1 fährt, fragt es dort nach mautrelevanten Daten z.B. nach Straßendaten, die zur Entscheidung, Straßengebühren zu zahlen notwendig sind.

Der Roaming-Partner R1 antwortet mit einem Datensatz, den er mit seinem geheimen Schlüssel signiert hat und übermittelt gleichzeitig (oder vorher bei einer Anmeldung) das Zertifikat, das ihm vom Heimatbetreiber H ausgestellt wurde, das jeden Empfänger auffordert, ihm (R1) zu trauen, der auch H traut.

Das Fahrzeuggerät, das eine Kommunikationseinrichtung zur drahtlosen Kommunikation enthält, kann die Signatur unter dem Zertifikat prüfen, da es den öffentlichen Schlüssel von H (gesichert) kennt und vertraut somit den Daten des Roaming-Partners R1.

Wenn das Fahrzeuggerät aus den Daten des Roaming-Partners R1 einen zu zahlenden Abschnitt erkennt, dann wird ein Zahlungsbeleg erzeugt und mit dem eigenen geheimen Schlüssel signiert. (Zur Sicherung der Vertraulichkeit kann dieser und ggf. andere Informationen zusätzlich der Datensatz mit dem öffentlichen Schlüssel des Empfängers verschlüsselt werden). Dieser signierte Zahlungsnachweis wird zusammen mit dem Zertifikat des Heimatbetreibers, das alle auffordert F1 zu trauen, an den Betreiber R1 geschickt. Dieser glaubt jetzt der Unterschrift aus Zertifikat und Signierung der Fahrzeugeinheit F1 und akzeptiert die Zahlung.

Er kann diese auch seinem Partner H vorlegen, da er mit der Aussprache des Vertrauens an F1 durch das Zertifikat H auch dieser Zahlung vertrauen muss. Ein entsprechender Zahlungsfluss von H nach R1 ist damit abgesichert.

Wenn das Fahrzeug F1 an eine Kontrollstelle E2 im Mautbereich des Roaming-Partners R1 kommt, dann schickt die Kontrollstelle E2 ein Zertifikat, das sie von ihrem Roaming-Partner R1 erhalten hat, in dem alle Empfänger aufgefordert werden, E2 zu trauen, die auch R1 trauen. Das Fahrzeuggerät traut bereits R1 durch das Zertifikat, das es bei der Übermittlung der Daten bekommen hatte und traut somit auch E2 als einer gültigen Kontrollstelle.

Das Fahrzeuggerät überträgt dieser Kontrollstelle somit die Quittung der Zahlung, die F1 selber unterzeichnet hatte und schickt auch gleichzeitig das eigene Zertifikat, das H ausgestellt hat, mit, in dem alle Empfänger aufgefordert werden, F1 zu trauen, die auch H trauen.

Dabei wurde E2 schon vorher durch die eigene Zentrale des eigenen Roaming-Partners R1 aufgefordert, dem Heimatbetreiber H zu trauen, was durch den Vertrag zwischen dem Heimatbetreiber H und dem Roaming-Partner R1 vereinbart wurde. Damit vertraut die Kontrollstelle E2 bereits dem Heimatbetreiber H des

Fahrzeuggerätes und durch Auswertung dessen Zertifikats traut nunmehr E2 auch dem Fahrzeuggerät F1 und damit der Zahlungsquittung.

Damit ist ein Abrechnen von Mautbeträgen aus einem anderen Mauterfassungsgebiet durch den Heimatbetreiber H, beispielsweise aus dem Gebiet des Roaming-Partners R1, aufgrund der gegeben Sicherheit verlässlich ermöglicht. Die Mauterfassungsgebiete können sich dabei auch überlappen.

Durch diese Realisierung ist unter Vermeidung einer zentralen Zertifizierungsstelle eine sehr sichere und organisatorisch wenig aufwändige Kommunikation und damit eine Mauterfassung ermöglicht.

Als Mautbetreiber H können grundsätzlich auch Unternehmen auftreten, die kein eigenes Mautsystem betreiben dabei aber als Zahlungsabwickler für zu zahlende Mautzahlungen auftreten. Dies kann beispielsweise eine Bank sein, die kein eigenes Mautsystem betreibt, aber die Mautzahlungsabwicklung auf Basis von Verträgen mit Roaming-Partnern durchführt.

## Patentansprüche

1. Verfahren zur Erfassung von Mautgebühren, wobei Fahrzeuge über Kommunikationseinrichtungen drahtlos mit einem ihnen zugeordneten Mautbetreiber mit entsprechender Kommunikationseinrichtung kommunizieren, wobei die Fahrzeuge in einem dem Mautbetreiber zugeordneten Mauterfassungsbereich dem Mautbetreiber mautrelevante Informationen übermitteln und der Mautbetreiber daraus die zu entrichtende Maut bestimmt oder diese abrechnet, wobei die Fahrzeuge F1 mittels ihrer Kommunikationseinrichtung außerdem eine Kommunikation mit anderen Mautbetreibern R1 außerhalb des Mauterfassungsbereichs des ihnen zugeordneten Mautbetreibers H zur Erfassung von Mautgebühren durchführen und eine erfolgreiche Kommunikation zum Austausch mautrelevanter Informationen nur bei erfolgreichem Übermitteln eines Zertifikates des zugeordneten Mautbetreibers H und auf Basis eines public oder eines privat keys erfolgt,
**dadurch gekennzeichnet,**
**dass** das Zertifikat und der public oder privat key gemeinsam übertragen werden, und
**dass** der Mautbetreiber H einem Fahrzeuggerät eines Fahrzeugs F1 einen öffentlichen Schlüssel seines Heimatbetreibers H zur gesicherten Speicherung sowie ein Zertifikat übergibt, das eine Kontrollstelle E2 des anderen Mautbetreibers R1 und den anderen Mautbetreiber R1 als Empfänger, die auch dem Heimatbetreiber H trauen, auffordert, dem öffentlichen Schlüssel von F1 zu trauen, und
**dass** dieses Zertifikat mit dem geheimen Schlüssel des Heimatbetreibers H unterschrieben wird, und
**dass** der Heimatbetreiber H auch dem anderen Mautbetreiber R1 ein Zertifikat übergibt, das die Kontrollstelle E2 und das Fahrzeug F1 als Empfänger, die auch dem Heimatbetreiber H trauen, auffordert, dem anderen Mautbetreiber R1 zu trauen, und
**dass**, wenn das Fahrzeug F1 in das Gebiet des anderen Mautbetreibers R1 fährt, das Fahrzeuggerät des Fahrzeugs F1 bei dem anderen Mautbetreiber R1 nach den mautrelevanten Daten fragt, die zu einer Entscheidung, die Mautgebühren zu zahlen notwendig sind, und
**dass** der andere Mautbetreiber R1 mit einem Datensatz antwortet, den er mit seinem geheimen Schlüssel signiert hat, und gleichzeitig oder vorher bei einer Anmeldung das Zertifikat übermittelt, das ihm vom Heimatbetreiber H ausgestellt wurde, das das Fahrzeug F1 als Empfänger, der auch dem Heimatbetreiber H traut, auffordert, dem anderen Mautbetreiber R1 zu trauen, und
wenn das Fahrzeuggerät des Fahrzeugs F1 aus den Daten des anderen Mautbetreibers R1 einen zu zahlenden Abschnitt erkennt, einen Zahlungsbeleg erzeugt und mit dem eigenen geheimen Schlüssel signiert.

2. Verfahren zur Erfassung von Mautgebühren nach Anspruch 1, bei dem, wenn das Fahrzeug F1 an der Kontrollstelle E2 im Mautbereich des anderen Mautbetreibers R1 ankommt, die Kontrollstelle E2 ein Zertifikat verschickt, das sie von ihrem anderen Mautbetreiber R1 erhalten hat, in dem das Fahrzeug F1 als Empfänger, der auch dem anderen Mautbetreiber R1 traut, aufgefordert wird, der Kontrollstelle E2 zu trauen.

3. Verfahren zur Erfassung von Mautgebühren nach Anspruch 2, bei dem das Fahrzeuggerät der Kontrollstelle E2 die Quittung der Zahlung überträgt, die das Fahrzeug F1 selber unterzeichnet hatte und gleichzeitig das eigene Zertifikat mitschickt, das der Heimatbetreiber H ausgestellt hat, in dem die Kontrollstelle E2 als Empfänger, der auch dem Heimatbetreiber H traut, aufgefordert wird, F1 zu trauen.

4. Verfahren zur Erfassung von Mautgebühren nach Anspruch 1, **dadurch gekennzeichnet, dass** das Zertifikat bilateral zwischen dem dem Fahrzeug F1 zugeordneten Mautbetreiber H und dem anderen Mautbetreiber R1 oder dem Fahrzeug F1 oder einer anderen Stelle des Kommunikationssystems zur Erfassung von Mautgebühren, insbesondere Mautkontrollstellen E2, festgelegt wurde.

5. Verfahren zur Erfassung von Mautgebühren nach Anspruch 4, **dadurch gekennzeichnet, dass** das Zertifikat ohne zentrale Zertifizierungsstelle festgelegt wurde.

6. Verfahren zur Erfassung von Mautgebühren nach einem der vorstehenden Ansprüche, **dadurch gekennzeichnet, dass** ein Übermitteln eines Zertifikates als erfolgreich gewertet wird, wenn das übermittelte Zertifikat auf einen erfolgreich zertifizierten Kommunikationspartner referenziert.

## Claims

1. Method for recording road tolls, wherein vehicles are, via communication devices, in wireless communication with an assigned toll operator having a corresponding communication device, wherein the vehicles transmit to the toll operator toll-relevant data in a toll recording region assigned to said toll operator and the toll operator determines or charges the road toll due from these data, wherein the vehicles F1 in addition communicate by means of their communication devices with other toll operators R1 outside the toll recording region of their assigned toll operator H for recording road tolls and a successful communication for exchanging toll-relevant data is possible only following the successful transmission of a certificate of the assigned toll operator H and on the basis of a public or a private key,
**characterised in that**
the certificate and the public or private key are transmitted together, and **in that** the toll operator H transfers to a vehicle device of a vehicle F1 an official key of its home operator H for secure storage as well as a certificate which instructs a control point E2 of the other toll operator R1 as well as the other toll operator R1 as recipients, which trust the home operator H as well, to trust the official key of F1,
and
**in that** this certificate is signed with the secret key of the home operator H, and
**in that** the home operator H further transfers to the other toll operator R1 a certificate which instructs the control point E2 and the vehicle F1 as recipients, which trust the home operator H as well, to trust the other toll operator R1,
and
**in that**, if the vehicle F1 enters the region of the other toll operator R1, the vehicle device of the vehicle F1 requests from the other toll operator R1 the toll-relevant data which are required for a decision on paying the road tolls, and
**in that** the other toll operator R1 responds with a record which it has signed with its secret key and at the same time or in advance transmits on request the certificate issued by the home operator H, which instructs the vehicle F1 as recipient, which trusts the home operator H as well, to trust the other toll operator R1,
and
**in that**, if the vehicle device of the vehicle F1 detects from the data of the other toll operator R1 a section to be charged, a payment record is generated and signed with the other toll operator's secret key.

2. Method for recording road tolls according to claim 1, wherein, if the vehicle F1 arrives at the control point E2 of the other toll operator R1, the control point E2 sends out a certificate which it has received from the other toll operator R1, in which the vehicle F1 as recipient, which trusts the other toll operator R1 as well, is instructed to trust the control point E2.

3. Method for recording road tolls according to claim 2, wherein the vehicle device transmits to the control point E2 the receipt of the payment which has been signed by the vehicle F1 itself and simultaneously sends out the certificate issued by the home operator H, in which the control point E2 as recipient, which trusts the home operator H as well, is instructed to trust F1.

4. Method for recording road tolls according to claim 1, **characterised in that** the certificate has been defined bilaterally between the toll operator H assigned to the vehicle F1 and the other toll operator R1 or the vehicle F1 or another point of the communication system for recording road tolls, in particular toll control points E2.

5. Method for recording road tolls according to claim 4, **characterised in that** the certificate has been defined without any central certification point.

6. Method for recording road tolls according to any of the preceding claims, **characterised in that** a transmission of a certificate is deemed successful if the transmitted certificate makes reference to a successfully certified communication partner.

## Revendications

1. Procédé de saisie des droits de péage, selon lequel des véhicules communiquent au moyen de dispositifs de communication sans fil avec un opérateur de péage associé à celui-ci avec un dispositif de communication correspondant, les véhicules transmettent à l'opérateur de péage des informations relatives au péage dans une zone de saisie de péage associé à l'opérateur de péage et l'opérateur de péage détermine ou calcule le péage à acquitter, les véhicules F1 au moyen de leur dispositif de communication réalisent en outre une communication avec d'autres opérateurs de péage R1 en dehors de la zone de saisie de péage de l'opérateur de péage H leur étant affecté pour la saisie des droits de péage et une communication réussie s'effectue pour l'échange d'informations relatives au péage uniquement lors de la transmission réussie d'un certificat de l'opérateur de péage H associé et sur la base d'une clé publique ou privée, **caractérisé en ce que** le certificat et la clé publique ou privée sont transmises ensemble, et **en ce que** l'opérateur de péage H délivre à un appareil d'un véhicule F1 une clé publique de son opérateur d'origine H pour le stockage sécurisé ainsi qu'un certificat qui invite un point de contrôle E2 de l'autre opérateur de péage R1 et les autres opérateurs de péage R1 en tant que destinataire qui font également confiance à l'opérateur initial H, à faire confiance à la clé publique du véhicule F1 et **en ce que** ce certificat avec la clé privée de l'opérateur initial H est signé, et **en ce que** l'opérateur initial H transmet également à l'autre opérateur de péage R1 un certificat qui invite le point de contrôle E2 et le véhicule F1 en tant que destinataire qui font également confiance à l'opérateur initial H, à faire confiance à l'autre opérateur de péage R1, et **en ce que**, lorsque le véhicule F1 pénètre dans la zone de l'autre opérateur de péage R1, l'appareil du véhicule F1 demande à l'autre opérateur de péage R1 les données relatives au péage nécessaires à la décision de payer les droits de péage, **en ce que** l'autre opérateur de péage R1 répond par un jeu de données qu'il a signé à l'aide de sa clé privée, et transmet simultanément ou préalablement par une demande le certificat que l'opérateur initial H lui a délivré, qui invite le véhicule F1 en tant que destinataire, qui fait également confiance à l'opérateur initial H, à faire confiance à l'autre opérateur de péage R1 et lorsque l'appareil du véhicule F1 reconnaît à partir des données de l'autre opérateur de péage R1 une section payante, génère un récépissé de paiement et le signe à l'aide de sa propre clé privée.

2. Procédé de saisie de droits de péage selon la revendication 1, selon lequel, lorsque le véhicule F1 arrive au poste de contrôle E2 dans la zone de péage de l'autre opérateur de péage R1, le point de contrôle E2 envoie un certificat qu'il a obtenu de l'autre opérateur de péage R1, dans lequel le véhicule F1 est invité en tant que destinataire, qui fait également confiance à l'autre opérateur R1, à faire confiance au point de contrôle E2.

3. Procédé de saisie de droits de péage selon la revendication 2, selon lequel l'appareil de véhicule du point de contrôle E2 transmet le reçu de paiement que le véhicule F1 a lui-même signé et simultanément envoie son propre certificat que l'opérateur initial H a délivré et dans lequel le point de contrôle E2 est invité en tant que destinataire, qui fait également confiance à l'autre opérateur H, à faire confiance au véhicule F1.

4. Procédé de saisie de droits de péage selon la revendication 1, **caractérisé en ce que** le certificat a été défini de manière bilatérale entre l'opérateur de péage H associé au véhicule F1 et l'autre opérateur de péage R1 ou l'autre véhicule F1 ou encore un autre point du système de communication, en particulier des points de contrôle de péage E2, pour la saisie des droits de péage.

5. Procédé de saisie de droits de péage selon la revendication 4, **caractérisé en ce que** le certificat a été défini sans autorité de certification centrale.

6. Procédé de saisie de droits de péage selon l'une quelconque des revendications précédentes, **caractérisé en ce qu'**une transmission d'un certificat est évaluée comme réussie lorsque le certificat transmis est référencé à un partenaire de communication certifié.
